# EUROPEAN PATENT SPECIFICATION

(11) **EP 3 668 052 B1**
(45) Date of publication and mention of the grant of the patent: **26.05.2021**
(21) Application number: 18382919.1
(22) Date of filing: 13.12.2018
(51) Int. Cl.: H04L 29/08, H04L 29/12, H04L 29/06

(54) **METHOD, SYSTEM AND DEVICES FOR IMPROVED MULTIMEDIA CONTENT DELIVERY**
VERFAHREN, SYSTEM UND VORRICHTUNGEN ZUR VERBESSERTEN MULTIMEDIA -INHALTSBEREITSTELLUNG
PROCÉDÉ, SYSTÈME ET DISPOSITIFS DE FOURNITURE DE CONTENUS MULTIMÉDIA AMÉLIORÉE

(43) Date of publication of application: 17.06.2020
(73) Proprietor: Telefonica, S.A., 28013 Madrid (ES)
(72) Inventor: HERNÁNDEZ PABLO, Jorge, 28013 Madrid (ES); CANO HILA, Francisco José, 28013 Madrid (ES); SILVESTRE PADRÓS, Antoni, 28013 Madrid (ES)
(74) Representative: Herrero & Asociados, S.L.

(56) References cited:
- EP-A1- 1 865 684
- WO-A1-2014/159962
- US-B1- 8 224 986
- US-B1- 8 239 445

## Description

### Technical field

The present invention relates to delivery of multimedia contents (especially video but also text, audio, software, or any other content or any combination of them) using, for example, adaptive streaming techniques, in communications networks. More particularly, the present invention relates to a method and system and device for improving delivery of contents in communications networks, especially when adaptive streaming is used.

### Background of the invention

Services such as video on demand, Internet television services, live events transmissions..., in which a multimedia content is delivered to end users in a communication session (e.g. using streaming), are being increasingly requested. Among the content delivery techniques, adaptive streaming is one of the most often used.

Adaptive streaming, also called adaptive bitrate streaming (ABR) is a widely used delivery mechanism of video over HTTP (Hypertext Transport Protocol). Service providers and network operators deploy adaptive streaming usually as a feature of content delivery networks (CDNs) to provide uninterrupted QoE (quality of experience) for the subscribers (end users) in networks, even with fluctuating bandwidth. There are several HTTP protocols defined by big industry players: HLS (HTTP Live Streaming) by Apple, HSS (HTTP Smooth Streaming) by Microsoft, HDS (HTTP Dynamic Streaming) by Adobe, DASH (Dynamic Adaptive Streaming HTTP) by MPEG... and they share the same basic concept of delivering over HTTP and adapting the streaming to the playback conditions. In the server side, a content server (e.g. a video server) delivers a manifest or playlist defining a set of bit rate streams, each one composed of a number of fragments, that the video server also delivers. In the client side, a video player (usually an end user electronic device) starts the playback requesting the manifest or playlist, and sequentially requesting the fragments needed to render the video. The fragment requested corresponds to the bit rate that better fits with the download conditions and visualization time.

The video player usually downloads few fragments to fill an internal buffer, so it can render the already downloaded video fragments while the video reproduction is advancing. In the event the time to play a fragment increases (e.g. network errors, user mobility, client saturation...) the time for downloading and rendering a fragment can be longer than the visualization time for that fragment. In such case, the internal buffer decreases and the video player should request fragments of lower bit rates (worse quality), whose size is smaller and downloading and rendering time is shorter. Later the download time can improve and the bit rate requested by the client is higher again, in order to play better quality fragments.

The explained delivery of manifest and fragments is usually done with HTTP request and responses messages, due to the wide support of this protocol in almost any consumer device. However, HTTP is a stateless protocol, so each request is managed independently of the previous requests and this is not an issue when the same server delivers the requests to the HTTP client. That is, adaptive streaming delivers sequentially video fragments to video players, and in order to avoid opening a new connection continuously, the same server should deliver all the fragments to each single player (e.g. end user's devices). However, delivering a video streaming at scale (e.g. with load balancing mechanisms) is not usually made by the same server to any simultaneous clients. The main reasons are the video service characteristics: delivery payload is high compared to web content, bad user experience in video visualization when content is delayed, simultaneous user requests for the same content (e.g. TV events)...

For example, a number of players in the market continuously resolves the domain of the URL (Uniform Resource Locator) during the video session and, in such cases, if the domain resolution changes (e.g. to enable load balancing with other server) the player closes the connection and open a new one with other server.

Changing of server during the video session implies opening a new connection and it has other unwanted consequences, especially when the server is close to the saturation point. For instance, when a streamer (a video server) reports to be full of capacity (close to the saturation point), the request router stops to return their IP (Internet Protocol) address in the domain resolution. Then a number of end users already connected to that streamer are disconnected and connected to new streamers, provoking an avalanche effect. This avalanche was the responsible of longer response time that could derivate in player re-buffering, worsening the user experience viewing a video content or a TV channel.

In order to avoid these unwanted effects, as much as possible the same server should deliver all the fragments to each single player (even in server saturation scenarios, the server should not be eligible for new video sessions, but its IP should be still returned for ongoing video sessions).

There are already some known prior art solutions to achieve that the same server delivers (as much as possible) all the fragments to each single player during a video session (also called sticky routing).

For example, US patent US8239445 achieves this sticky routing by a mechanism which modifies the path of the URL adding a mark (a cookie) univocally identifying the user and, when the user requests for a content, the load balancer recognizes the mark and sends the requests to the same server.

Other prior art solutions are, for example, US patent US8224986 B1 which proposes a content engine which receives a content request from a client, generates a result based on the content request, the result including one of a content-providing value and a redirection value in response to the content request, and selectively provides, to the client, one of (i) content when the result includes the content-providing value, and (ii) a redirection message when the result includes the redirection value, the redirection message including an extended domain name having a client identifier which identifies the client.

European Patent Application EP1865684 A1 proposes, in a network interconnecting a plurality of content providers and a plurality of clients, providing content to a client, each of the plurality of content providers is coupled to at least one content distribution network of a plurality of content distribution networks. The client is coupled to at least one of the plurality of content distribution networks and a request for the content is sent from the client to a redirector node that receives requests and a redirector at the redirector node provides an address for a server available to serve the requested content.

Patent application WO2014/159962 A1 discloses systems, methods, and instrumentalities to select a distributed gateway (D-GW) via a wireless transmit/receive unit (WTRU). The WTRU may be configured to detect a request for an address associated with content and may receive an address list associated with the content. If an address of a currently connected D-GW is included in the address list, the WTRU may select the currently connected D-GW. If the address of the currently connected D-GW is not in the address list and an address of an anchor D-GW that is not currently connected is included in the address list, the WTRU may select the anchor D-GW that is not currently connected.

Other prior art solutions (as the one used by Akamai or the one disclosed in patent US8868756) propose the use of cookies (called "stickiness cookies") to maintain the video session always with the same server. And for example, Cisco achieves the sticky routing by storing for each single user which is the resolved server IP, and for the next DNS resolution requests they use this information in order to return the same server IP.

The described prior art mechanisms require that the request is routed at HTTP level, even fixing the IP of the server in a redirection. Furthermore, the prior art solutions imply several other shortcomings:
The "stickiness cookies" mechanisms require the players to accept the usage of cookies and return for the following requests the same cookie returned previously. Accepting and using cookies may not be supported by some devices with ad hoc players (e.g. set-top boxes) or could require the explicit acceptance of the user. The present invention does not use cookies and is based only in modifying the domain name of the url with an HTTP redirection. Redirections is part of the of HTTP RFP so any standard HTTP client supports it.
The mechanism used by Cisco needs to store and use a full map of users and servers IP, which makes difficult to scale the resolution between distributed request routers or to achieve the response time for a quick resolution. Modifying the URL as proposed in US8239445 would imply to change the manifest/playlist content to add the anchor to the fragments declaration of urls, making the whole more complex and slow. Moreover, the mechanism proposed in US8239445 also implies the use of cookies which, as previously stated, limits significantly the players where it can be applied, because some devices does not support cookies (for example, when using Smooth Streaming, most of the players do not support the use of cookies).

Therefore, there is a need of an improved sticky routing mechanism in order to overcome the limitations of existing prior art solutions.

### SUMMARY

The problems found in prior art techniques are generally solved or circumvented, and technical advantages are generally achieved, by the disclosed embodiments which provide a method, system and a device for maintaining the same streamer (server) during a video session. The proposed solution modifies the domain name adding an anchor to the url, usually during the request routing redirections; this anchor enables to the request router to return the same server IP address for any domain resolution during a player video session.

In the proposed invention, the request routing use a Domain Name System (DNS) request routing mechanism to stick the player to a server using an anchor, so it is different to the prior art mechanism where the request is routed at HTTP level, even fixing the IP of the server in a redirection. The proposed invention enables to not set the IP in the redirection and allow balancing to a different server in cases where the server is really unavailable. Moreover, the proposed invention does not use cookies to stick the server (avoiding the mentioned prior art problems regarding the use of cookies), but it is based only in modifying the domain name of the url with an HTTP redirection. Redirections is part of the HTTP RFP (HTTP Request for proposal) so any standard HTTP client supports it. Moreover, the proposed invention (contrary to the mentioned CISCO prior art) does not need to store this kind of maps and does not need to share information among different routers, even in different locations.

Consequently, some of the main advantages of the proposed mechanism are:
It enables to use a DNS-based request routing mechanism.
It is agnostic of the players, as the domain resolution is implemented in the internet layers of any device.
As it does not use cookies, it does not force the players to support this mechanism (cookies).
In the present invention, the path of the url is not changed (but only the domain name) which implies a better performance especially in video protocols using fragments built from a manifest. Modifying the path of the url (as proposed in US8239445) would imply to change the manifest/playlist content to add the anchor to the fragments declaration of urls.
In the present invention the anchor does not identify the user (contrary to the solution proposed in US8239445) which makes the solution easier to scale.

In a first aspect, it is proposed a method, according to independent claim 1, for improved multimedia content delivery to end user equipments (in a content delivery network comprising several servers). The delivery will be made through one or more communications network using any delivery technique, for example, a streaming technique and more specifically an adaptive streaming technique. The method comprising
- A first server (an optimal server) receiving a first message (for example, an HTTP message and more specifically a GET message) from an end user equipment, the message including a URL including a first domain name (host name);
- After receiving said first message, the first server determining if said first domain name includes an identifier of a server of the content delivery network, called anchor identifier, and if not, the first server sending back to the end user equipment a redirection message including a second domain name in the URL, said second domain name being the result of adding to the first domain name an anchor identifier identifying the first server (that is, the server adds an identifier of itself in the domain name as an anchor identifier, if the domain name does not already include an anchor identifier of the first server or of another server);
   wherein, when a Domain Name system, DNS, device of the content delivery network receives a domain name resolution request (from the end user equipment) for a domain name including said anchor identifier, the DNS device (e.g. a router) sends back (to the user equipment) a message answering to the domain name resolution request, including the IP address of the first server regardless the congestion level of said server, as long as the first server is available (the server is not down and consequently it is available for delivering a content). In other words, that is, the DNS device determines if said first server is available and if so, it always sends back the IP address of said first server identified by the anchor identifier, even when the server is congested.

The end user equipment may be a mobile phone, a tablet, an smart phone, a computer, a PC, a laptop or any electronic device which is able to receive multimedia content through the communication network.

In an embodiment, the messages are HTTP messages.

In an embodiment, the first domain name is a redirected domain name, that is a domain name already redirected by another server (not an original request hostname).

The first message may be a message requesting a manifest for a multimedia content streaming session or a fragment of the multimedia content and where, if said first domain name already includes an identifier of a server of the content delivery network, the first server sending the requested manifest or fragment to the end user equipment. In an embodiment the first domain name is an original request domain name (that is a canonical CDN or a customer domain name). In this embodiment, a request routing improvement may be enabled in the first server. In another embodiment the first domain name is not an original request domain name.

In an embodiment the DNS device is a router (for example, a request router of a content delivery network).

In an embodiment, the first domain name belongs to a group of specific domains for which adding an anchor identifier is allowed. (that is, anchor redirection is only allowed to a specific group of domain names, not to any domain name).

In an embodiment, the multimedia content is video content.

In a second aspect, it is proposed a DNS device, according to independent claim 10, for improved multimedia content delivery to end user equipments in a content delivery network comprising several servers, the device being characterized by comprising
- A receiver for receiving (from an end user equipment), through the content delivery network, a domain name resolution request for a domain name;
- A transmitter for transmitting messages through the content delivery network; the device being comprising a processor configured to:
- Determine if said domain name includes an anchor identifier identifying a server; if so, determine if said server identified by the anchor identifier is available and if said domain name includes an anchor identifier identifying a server and the server is available, send back using the transmitter, a message answering to the domain name resolution request including an IP address of the server identified by the anchor identifier regardless the congestion level of said server.

In a third aspect, it is provided a system, according to independent claim 11, for improved multimedia content delivery to end user equipments in a content delivery network, the system comprising
- A server comprising:
   - A receiver for receiving, through the content delivery network, a first message from an end user equipment, the message including a URL including a first (redirected) domain name;
   - A transmitter for transmitting messages through the content delivery network;
- A DNS device comprising:
   - A receiver for receiving, through the content delivery network, a domain name resolution request for a domain name;
   - A transmitter for transmitting messages through the content delivery network;
- the server comprising a processor configured to, after receiving said first message, determining if said first domain name includes an identifier of a server of the content delivery network, called anchor identifier, and if not, send back to the end user equipment using its transmitter, a redirection message including a second domain name in the URL, which is the result of adding to the first domain name an anchor identifier identifying the server;
- the DNS device comprising a processor configured to:
   determine if the domain name included in the domain resolution request message includes an anchor identifier identifying a server and if said domain name includes an anchor identifier identifying a server and the server is available, send back using its transmitter, a message answering to the domain name resolution request including an IP address of the server identified by the anchor identifier regardless the congestion level of said server.

A last aspect of the invention refers to a non-transitory digital data storage medium, according to independent claim 12, for storing a computer program which comprises instructions causing a computer executing the program to perform the above-described method

Further embodiments are defined in the dependent claims.

### BRIEF DESCRIPTION OF THE DRAWINGS

To complete the description that is being made and with the object of assisting in a better understanding of the characteristics of the invention, in accordance with a preferred example of practical embodiment thereof, accompanying said description as an integral part thereof, is a set of drawings wherein, by way of illustration and not restrictively, the following has been represented:
Figure 1 shows a schematic diagram of the main transactions of a video streaming session in a Content Delivery Network according to a first prior art scenario.
Figure 2 shows a schematic diagram of the main transactions of a video streaming session in a Content Delivery Network according to a second prior art scenario.
Figures 3a, 3b and 3c shows a schematic diagram of the main transactions of a video streaming session according to one embodiment in the invention.
Figure 4 shows the number of HLS players connected to an specific CDN server during a live football event, when applying the proposed solution according to one embodiment in the invention.

Throughout the figures like reference numerals refer to like elements.

### DESCRIPTION OF EMBODIMENTS

The present inventions may be embodied in other specific devices, system and/or methods. The described embodiments are to be considered in all respects as only illustrative and not restrictive. In particular, the scope of the invention is only defined by the appended claims rather than by the description and figures herein.

Service providers and network operators increasingly ue content delivery (and more specifically adaptive streaming), to deliver multimedia content (e.g. video) to end users over communications networks. The communication networks may be mobile communication networks (2G, 3G, 4G, LTE...) or any other type or wired or wireless communications networks. Content Delivery Networks (CDNs) are often used for scaling delivery of contents over one or more communication networks and are very useful for video streaming. This kind of networks uses to leverage over the DNS and HTTP mechanism to seamlessly deliver the content to the client by addressing the end user request to optimal servers, depending on different criteria, like the load of the servers, the network topology, the availability of the content... The mechanisms to route these requests depends on the technology and implementation of each CDN, but are usually based on HTTP and DNS (Dynamic Name System) features, such as redirections, headers, cookies, CNAMEs (Canonical Name)... As any manifest (defining a set of bit rate streams) or fragment request over HTTP is downloaded with a different request, the request routing mechanism of a CDN could route every requests to different servers of the CDN. As previously explained, this situation is not desirable from the CDN perspective (worse performance) and user experience (new connections takes more download time).

There are two main approaches to avoid it:
Client side: Some video players (e.g. end users equipments) are aware of the video "session" concept (in the sense that they now which requests belong to the same video session, that is, to the same content streaming), and once the first manifest is routed to an optimal server, the HTTP connection is established and the manifest is downloaded, the requests for the upcoming fragments are done to the same server while it responses properly to the requests.
CDN side: The concept of video "session" is managed internally by the CDN, so that all the requests to the same content from the same end user is routed to the same server while that server is still optimal for delivering that session.
In the present document, a content session (for example a video session) is defined as a series of related transactions to perform a unit of work (to stream a specific content to a specific end user)

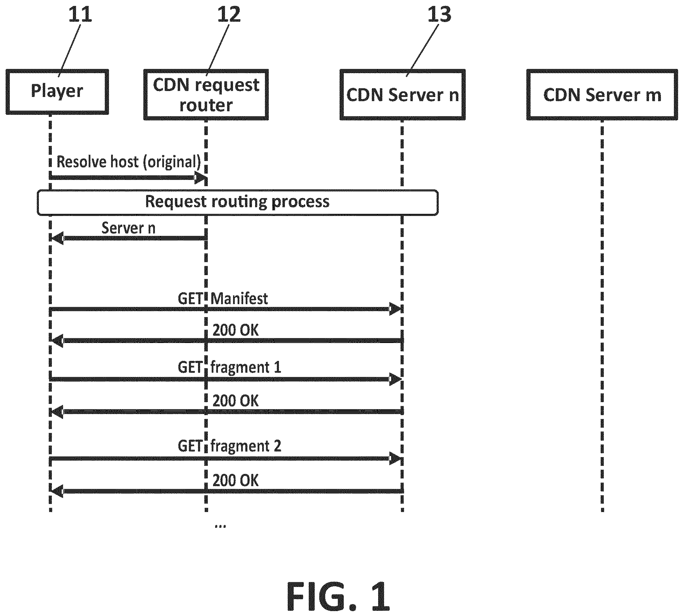

Nowadays there are several players, type A players, (video players if the delivered content includes video) implementing the client side approach, and once the request routing process has returned the optimal server the ABR manifest and fragments are requested to the same server. This is shown in figure 1, where the player (end user, 11) sends a request to resolve host (domain resolution) to a node (12) of the network (usually a router, called CDN request router), this node (after a request routing process) tells the end user that the optimal server is a certain server (server n, 13) and then the player requests the manifest and all the fragments of the video content to the same server, as shown in figure 1. In the present document, we are going to use equally the terms player, video player or end user equipment (or simplifying "end user") to refer to the same concept, the electronic device used by the end user to request and play the video streaming. Said electronic device may be a mobile phone, a tablet, an smart phone, a computer, a PC, a laptop or generally speaking electronic device which can communicate through a communication network.

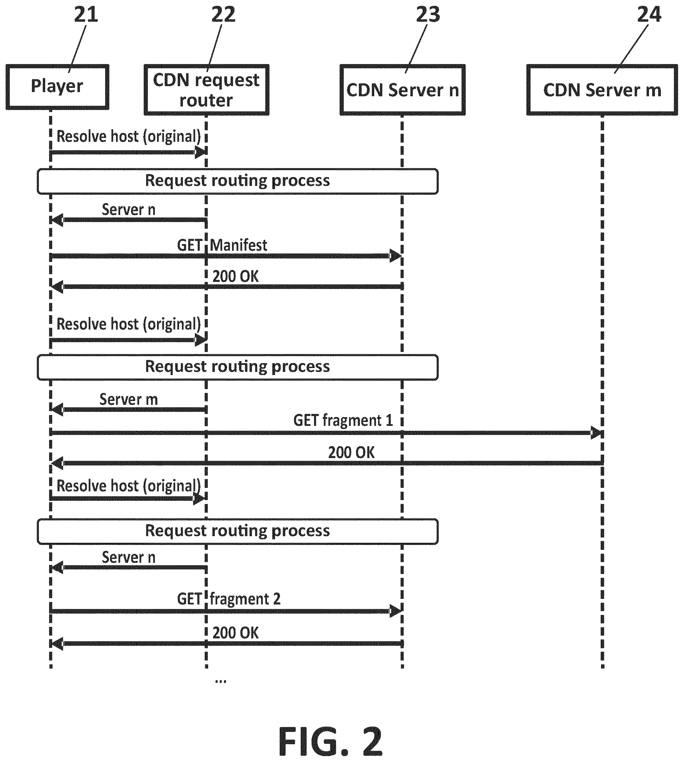

However other players, type B players, repeat some of the steps of the request routing mechanisms, such as resolving again the redirected domain or requesting with the original domain, during a single video session. For this second group of players, the optimal endpoint (the optimal server) returned by the CDN can be different in some circumstances each time the players asks to resolve the domain. This is shown in figure 2, where the player (end user, 21) sends a request to resolve host/domain (in other words to know to which node or server it must address to receive the video content fragments and/or manifest) to a CDN request router (22) of the network, this node (after a request routing process) tells the player that the optimal server is a certain server (server n, 23), the player request the manifest to this server. After the player receives the manifest, then it repeats the "resolve host" process, and this time the router 22, tells the player than the optimal server (e.g. due to a change in the traffic conditions of due to load balancing) is now another server (server m, 24). Then, the player requests fragments of the video content to the server m. This process can be repeated and the optimal server (to which the player requests the video fragments) can change again (as shown in figure 2, where after fragment 1, the router 22 tells the player that the optimal server is server n 23 again) depending of the specific circumstances.

Depending on the CDN request routing, these circumstances may vary so the optimal server returned by the CDN can vary during a video session (for type B players). A typical case is the CDN stop returning a specific server as optimal when the number of end users connected to the server has reached its limit, and then return a different server. In this scenario, the following behaviour was observed in a Content Delivery Network of one telecommunications operator:
Players type B changes to other server (server m) when the first optimal server (server n) reached its (saturation) limit.
The number of users in server m increases to a number of players above its limit while the number of players connected to server n decreases, as players type B has stopped requesting to that server.
Player type B again changes to a different optimal server, that could be server n if the number of players has decreased and is again below its limit.
The number of users in server n can be again over its limit and the ping pong request routing process start again.

This was observed, for example, during a live football event, when the number of HLS players connected to a certain server had a sawtooth profile (once and again, going from aprox. 3000 to 4500 players and then down again to 3000 players in a very short period of time).

So, a serious problem arises when the CDN servers are close to the saturation point (for example, during high audience moments), which can affect the end users experience (for example, provoking an avalanche effect that is responsible of longer response times).

These and other problems are solved by the solution proposed in the present document. In the proposed solution, an anchor is added to the url domain name during the request routing redirections (that is, the domain name is modified). The domain (or domain name) in an HTTP request is an specific head also called HOST (that's why the domain name is also called host name). In a HTTP request the path/location of the URL is included after the domain name. This anchor enables to a DNS device (e.g. a request router) to return the same server IP for any domain resolution during a player video session, although this server cannot be eligible for other new end users due to its load level. In the event the server gets down or not available, the resolution would change returning a different server IP. This mechanism avoids changing of server during the video session, which is especially important when the server is close to the saturation point. In this point, the server should not be eligible for new video sessions, but its IP address must be still returned for ongoing video sessions. The anchor can be added as an additional redirection even with the optimal server, which would response with this redirection instead of starting delivering the playlist/manifest.

The request router is the node in a CDN in charge of directing the requests to the optimal server. In a preferred embodiment of the present invention, the request router is a DNS device which performs the anchoring by changing the domain name (and also tracks the state of the end points or servers with the DNS tracker). Generally speaking, the node performing this anchoring or sticking will be a DNS device as it is made changing the domain name. The DNS tracker is a part (a component) of a DNS device which is in charge of tracking the end points to decide which one is the optimal one. So, when in the present text, it is mentioned that certain action is performed by the DNS tracker is meant that is performed by the DNS device (the DNS device, in an embodiment, being the request router of a CDN).

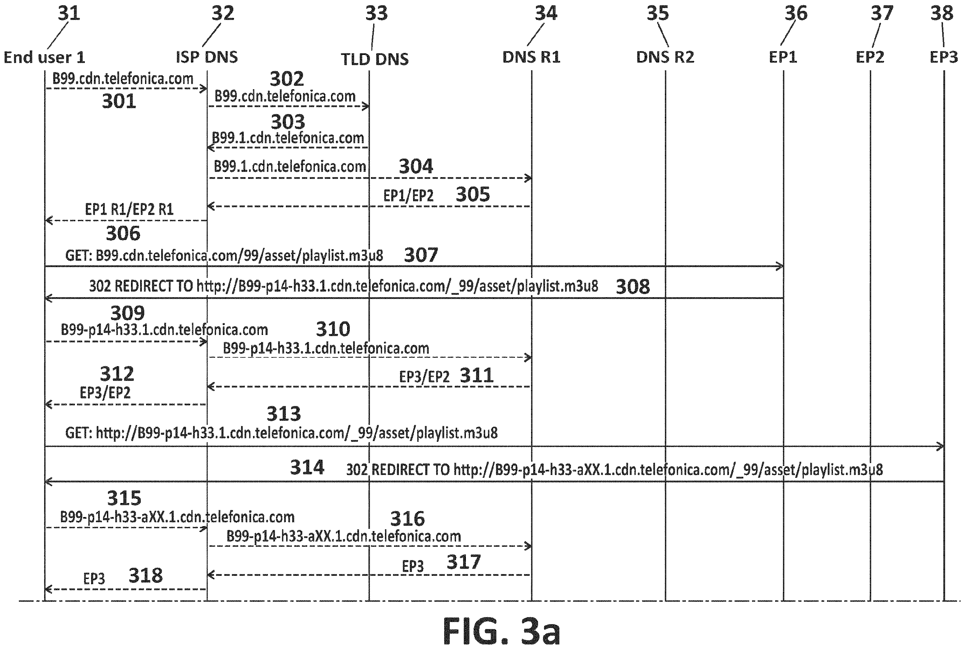

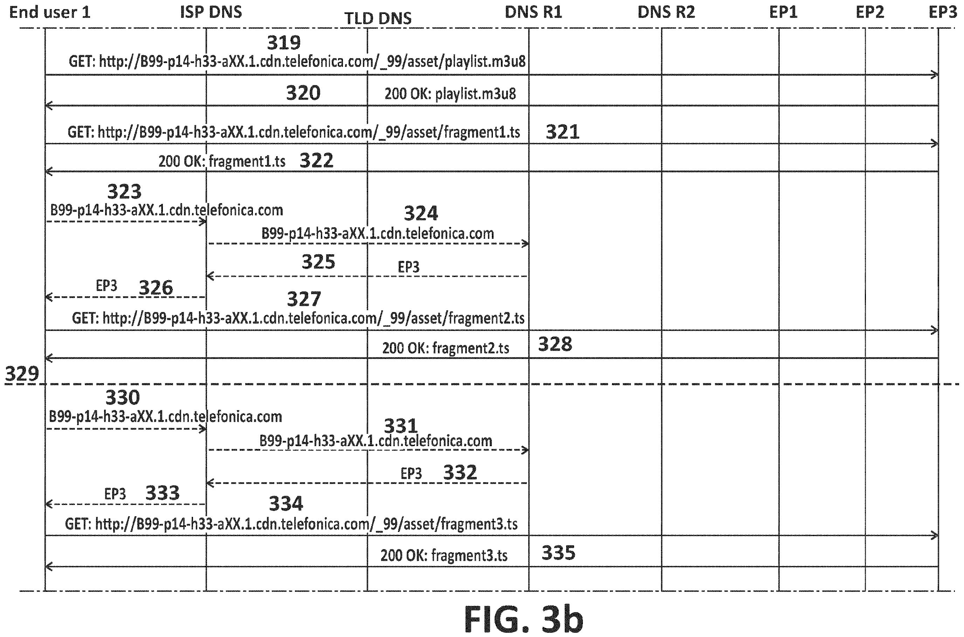

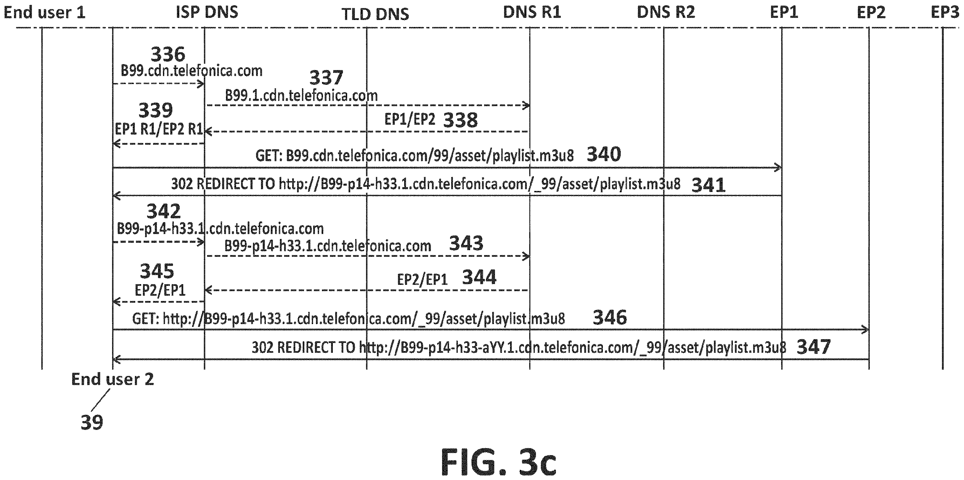

Figure 3 shows a schematic diagram of the main transactions of a video streaming session according to one embodiment in the invention. As the amount of transactions was too high to be clearly seen in only one figure, it has been divided in three figures (3a, 3b and 3c), being figure 3b a continuation (in time) of figure 3a and figure 3c a continuation of figure 3b. The whole diagram should be seen as starting in figure 3a, continuing with figure 3b and ending in figure 3c.

Figures 3a, 3b and 3c show an example of nodes of a network where the present solution can be applied, having an illustrative and non-limiting character so the present solution can be used in any type of network having different type, name and number of nodes than the example shown in figures 3a, 3b and 3c. Actually, in figures 3a, 3b and 3c for simplicity purposes, only some nodes are shown; however, a real content delivery network will have more nodes (more DNS, end points, user equipments...).

In the example shown in figures 3a, 3b and 3c, there is an end user equipment or video player (end user 1 31), a ISP (Internet Service Provider) DNS node 32, a TLD (Top Level Domain) DNS 33, two additional DNS nodes, e.g. request routers, (DNS R1 34, DNS R2 35) and three end points (EP1 36, EP2 37, EP3 38).

The end points may be any electronic node (usually a server) which is able to delivery (stream) requested video content to the end user. The DNS nodes may be any server, router...which perform the domain resolution. The domain name resolution is hierarchical, that's why different DNS nodes are usually involved in a complete domain name resolution: first a ISP DNS which routes the resolution request to a TLD (top level domains like .com, .org...) DNS which routes the resolution request to another DNS...until the DNS having the final translation of the specific domain name to the IP corresponding to the end point (EP) to which the end user have to address to receive the video content.

For a better understanding of the proposed solution, it will be explained here the main steps of the video streaming according to one embodiment in the invention in an exemplary scenario (shown in figures 3a, 3b and 3c).

Firstly (figure 3a), the end user equipment (end user 1) sends a message (301) with a domain name (899.cn.telefonica.com) for domain name resolution to the ISP DNS, which asks (302) a TLD DNS which tells (303) the ISP DNS the IP address of the next DNS (DNS R1) to consult. ISP DNS sends (304) the domain resolution to DNS R1 (which in this example is the one having the final translation of the specific domain name). The DNS R1 sends to the ISP DNS (305) the IP addresses (in random order) of two possible end points (EP1 and EP2) within the end user region from which the requested video content can be requested. The ISP DNS sends (306) said IP addresses of both end points to the end user 1.

Then the end user sends a "GET" message (307) to the first End Point which IP address have been received (EP1) to get the manifest (play list) for the requested video content. Then the EP1 makes a regular redirection and sends a redirection message (308) with a new domain name to the end user (in the redirection message the symbol "_" means intra-regions redirection). The end user sends (309) a domain name resolution message (for the new domain name, 899-p14-h33.1.cdn.telefonica.com) to the ISP DNS which routes it (310) to the DNS R1. This DNS tracker applies regular end point selection mechanism and provides (311) the IP addresses of the most suitable End Points (depending for example of the load of the end points or any other factor; in this case said end points will be EP2 and EP3) to the ISP DNS, which sends (312) them in random order to the end user. The number of End Points (EPs) supplied by the DNS will depends on a system design parameter (called for example numlPs) which specifies the amount of IP addresses of End Points (EPs) returned by the DNS. In the example shown in figures 3a, 3b and 3c, "numlPs"=2 (but it may have any value 1, 2, 3, 4...depending on the specific system design), which means that the DNS will return the IP addresses of the two most suitable EPs.

Until now (301-312), all the explained steps described the regular request routing mechanism to select the optimal video server. Now (313-XXX) it will be explained how, in order to add the stickiness to the user, the anchor is added to the domain with an additional redirection, finally the end user receiving the first piece (fragment) of content.

After receiving (312) the IP addresses of the most suitable EPs (in this case EP2 and EP3), the end user sends a "GET" message (313) to the first End Point which IP address have been received (EP3) to get the manifest (play list) for the requested video content. When EP3 receives said "GET" message from the end user, it applies an additional redirection (anchor redirection) adding a parameter or prefix to anchor (called anchor prefix, anchor identifier or only anchor) to the end point to which the end user is going to be stuck for this video session (said anchor prefix will be and identifier of the end point or server). Then the EP3, sends a redirection message (314) including the anchor to the end user. As you can see in message 314, in this case the anchor added to the domain name is "aXX" which represents the end server EP3 (this is only an illustrative example).

As it previously happened, when the end user receives the redirection message with a new domain name, the end user sends (315) a domain name resolution message (for the domain name including the anchor, in this case, 899·p14·h33·aXX.1.cdn.telefonica.com) to the ISP DNS which routes it (316) to the appropriated DNS (DNS R1). In this case, the DNS (its tracker) does not applies a regular end point selection mechanism but it identifies the anchor prefix in the domain name as representing the anchoring end point (in this case EP3) and if said end point is available, the DNS selects it (regardless whether it is congested or not). The DNS will answer to the domain name resolution only with the IP address of the end point identified by the anchor prefix (in this case EP3). Said IP address will be sent to the ISP DNS (317) and from there to the end user (318).

Preferably, the number of servers to which the server is stuck (anchored) is one. However in an alternative embodiment it can be more than one or it may exist a system design parameter (called for example numlPs_stickiness or numlPs_anchored) which specifies the amount of End Points (1, 2, 3...) to which the video session is stuck (and consequently, the amount of IP addresses returned by the DNS).

After receiving (318) the IP address of the anchored EP (in this case EP3), the end user sends a "GET" message (319) to the end point to get the manifest (play list) for the requested video content. The EP receives said GET message an manages the request regardless whether it is the anchor EP or not (as the GET message includes a domain name with an anchor prefix, the end point knows that an anchor has been already added so it must not redirect again the message as previously done). In other words, the EP receiving a domain name with an anchor prefix (anchor identifier) serves the requested content or manifest even if the anchor prefix does not correspond to this EP, because if the DNS device has returned this end point IP address (with an anchor prefix identifying another EP) is because the EP identified by the anchor prefix is not available (is fallen); this is done to avoid a ping-pong effect in the redirections. So EP3 returns back the manifest (320) to the end user, the end user asks for the first fragment of the video content (321) to EP3 and the end point returns the fragment (322). From now on, the content is continuously delivered by the same optimal video server, despite this server may be saturated (congested). That is, even if the player (end user) resolves again the last host name during the video session, the DNS will return again the same IP address (of the anchored end point) and the end user will request the following fragment to the same end point.

This is shown in figure 3b; after receiving the first fragment, the end user decides to resolve again the last host name. In order to do so, the end user sends (323) a domain name resolution message (for the domain name including the anchor 899·p14·h33·aXX.1.cdn.telefonica.com) to the ISP DNS which routes it (324) to the appropriated DNS (DNS R1). In this case, the DNS (its tracker) does not applies a regular end point selection mechanism but it identifies the anchor prefix in the domain name as representing the anchoring end point (in this case EP3) and if said end point is available, the DNS selects it (regardless whether it is congested or not). The DNS will answer to the domain name resolution only with the IP address of the end point identified by the anchor prefix, in this case EP3 (as numlPs-stickiness=1) . Said IP address will be send to the ISP DNS (325) and from there to the end user (326). Then the end user uses the returned IP address to ask for the second fragment of the video content (327) to EP3 and the end point returns the fragment (328).

In the example shown in figure 3b, after delivering said second fragment the end point EP3 gets congested (329). However (as shown in figure 3b), if the end user 1 decides to resolve again the last host name, the DNS will return to the end user the IP address of EP3 (if it is available, regardless whether it is congested) and the end user will ask the video fragment to EP3 (see figure 3b, steps 330, 331, 332, 333, 334 and 335), exactly as it happened before the end point EP3 was congested.

Hence, in the proposed mechanism, when the server is congested its IP address is still returned for ongoing video sessions (avoiding changing of server during the video session); however, the congested server should not be eligible for new video sessions or new end users.

This is shown in figure 3c, where it is shown that a new end user (end user 2, 39) with a stickiness player, starts a streaming session for the same content and, in this case, from the same PID (network partition ID). Depending on the IP address of the end user, he will belong to a certain PID (and only to one). Thanks to the network partition ID the DNS tracker is able to assign EPs which are closed to the end user (at a network level). As it will be explained now, this new user will be addressed to a different video server as the first one (EP3) is saturated to new users.

The new end user equipment (end user 2) sends a message (336) with a domain name (899.cdn.telefonica.com) for domain name resolution to the ISP DNS, which asks (337) an appropriated DNS (DNS R1) the domain resolution to DNS R1 (which in this example is the one having the final translation of the specific domain name). The DNS R1 sends to the ISP DNS (338) the IP addresses (in random order) of two possible end points (EP1 and EP2) within the end user's region from which the requested video content can be requested. The ISP DNS sends (339) said IP addresses of both end points to the end user 2.

Then the end user 2 sends a "GET" message (340) to the first End Point which IP address have been received (EP1) to get the manifest (play list) for the requested video content. Then the EP1, as request routing improvement is disabled, makes a regular redirection and sends a redirection message (341) with a new domain name to the end user. The end user sends (342) a domain name resolution message (for the new domain name 899·p14·h33.1.cdn.telefonica.com) to the ISP DNS which routes it (343) to the DNS R1. The DNS R1 tracker applies regular end point selection mechanism to select the most suitable end points taking into account that EP3 is congested, so EP3 will not be selected. DNS R1 sends (344) the IP addresses of said selected EPs to the ISP DNS, which sends (345) them in random order to the end user 2. As before, the number of End Points (EPs) supplied by the DNS will depends on a system design parameter (called for example numlPs) which specifies the amount of IP addresses of End Points (EPs) returned by the DNS. In the example shown in figures 3a, 3b and 3c, "numlPs"=2 which means that the DNS will return the IP addresses of the two most suitable EPs.

After receiving (345) the IP addresses of the most suitable EPs (in this case EP2 and EP1), the end user sends a "GET" message (346) to the first End Point which IP address have been received (EP2) to get the manifest (play list) for the requested video content. When EP2 receives said "GET" message from the end user, it applies an additional redirection (anchor redirection) adding a prefix to anchor (anchor prefix) to the end point to which the end user is going to be stuck for this video session (said anchor prefix will be and identifier of the end point or server). Then the EP2, sends a redirection message (347) including the anchor to the end user. As you can see in message 347, in this case the anchor added to the domain name is "aYY" which represents the end server EP2 (this is only an illustrative example). From now on (as previously explained in the case of end user 1 and EP3, steps 315-335), the streaming session of end user 2 will be delivered form EP2 while it is available even when EP2 is congested.

The above mechanism is implemented in the DNS device (e.g. request router) and in the end point (video server) as it will be explained now.
- In the request router (a DNS device), the DNS tracker returns the same video server IP address when de domain is stuck regardless the load level of the server. Only when the server is not available (or it is disabled or redirect), the IP address of a different server is returned. That is, when the DNS device (the request router) receives a domain name (also called host name) for domain resolution, the device (the tracker) determines whether the host name is an anchored hostname or not (that is, it determines whether the received host name includes an anchor). If the host name is not anchored, the DNS tracker applies regular end point selection mechanism and returns the IP addresses of the most suitable EPs. If the host name is anchored (it includes an anchor prefix), then the DNS device determines if the EP identified by the anchor prefix is disabled or stopped. If so, the DNS tracker applies regular end point selection mechanism and returns the IP addresses of the most suitable EP(s). If not (the EP identified by the anchor prefix is not disabled or redirected), the tracker will answer only with the IP address of the EP(s) identified by the anchor prefix, if said EP is available. If the EP is not available, the DNS tracker applies regular end point selection mechanism and returns the IP addresses of the most suitable EP(s).
- In the end point (video server or more generally speaking, content server), it redirects adding the anchor (anchor redirection) when the hostname received is the corresponding to the optimal endpoint selection. For example, when the server receives a message requesting a manifest or a fragment (GET message), it reads the host name included in the message (the parameter Redir= True). If the host name is an anchored host name (the host name includes an anchor identifier, the EP delivers the requested content (manifest or fragment), regardless that the anchor identifies said End point or not; if the anchor identifier does not identify the EP but another EP (anchor EP) it means that the anchor EP is not available and that's why the message has been directed to this EP, so in any case the EP will deliver the requested content.

If the host name is not an anchored host name (the host name does not include an anchor identifier) but a redirected host name, it means that the end point is already the optimal end point within all the available end points and it performs anchor redirection (that is, it returns a redirection message including an anchor identifier identifying this EP).

Usually, if the host name is an original request hostname (or domain name), that is a canonical name of a CDN or a customer host name usually normal redirection (not anchor redirection) is performed (including pid/hash). The original request hostname is the domain name (host name) included in the url at the first content request of the end user. This original request domain name can be a CDN domain name (for example, the CDN of an operator as Telefonica, whose canonical name at DNS level is b1.cdn.telefonica.com or b99.cdn.telefonica.com as in the example or figures 3a, 3b and 3c) or it can be a customer host name (e.g. customer.com).

In an embodiment, there is a functionality called request routing improvement in the CDN and if the host name is an original request hostname and if this functionality is enabled, anchor redirection is performed. That is, in this specific embodiment, if the host name is an original request hostname, it is determined whether request routing improvement is enabled. If so, anchor redirection is performed by the EP, including pld+hash. If not, normal redirection (not anchor redirection) is performed (including pid/hash).

As previously stated, when the host name is an original request hostname, PID (Network Partition ID) and hash (identifying a content group in order to equally distribute the content delivery between EPs close to the end user) is usually included in the redirection.

Now, an specific example (for illustrative purposes only, non limitative) is going to be disclosed in order to better explain this end-point process. For example, in an embodiment the url original domain name is BX.cdn.telefonica.com (where X is a value which depend on the specific implementation, 99 in the case disclosed in figures 3a, 3b and 3c). Then, as the domain name is an original request hostname, a normal redirection is made including a PID (for example, pY, where Y is value which depend on the specific implementation, 14 in the case disclosed in figure 3) and a hash (for example, hZ, where Z value which depend on the specific implementation, 33 in the case disclosed in figures 3a, 3b and 3c). So the domain name in said redirection is BX-pY-hZ.1.cdn.telefonica.com. Then, as shown in figures 3a, 3b and 3c, with said domain name, the optimal EP is selected and a message is sent by the end user with said domain name (BX-pY-hZ.1.cdn.telefonica.com), to said optimal EP if available. And, as the domain name is not an original request hostname (but a redirected hostname), the EP makes the last redirection adding the anchor (for example, aW, where is W is a value which identifies the EP, aXX in the case disclosed in figures 3a, 3b and 3c); so the modified domain name with the anchor will be Bx-Py-hZ-aW.1.cdn.telefonica.com.

The described embodiments are to be considered in all respects as only illustrative and not restrictive attached as an integral part thereof, having an illustrative and non-limiting character. Other embodiments with alternative features can be implemented, as long as they fall within the scope of the present invention which is only defined by the appended claims.

For example, in an alternative embodiment, in the first redirection (the domain name received is an original request hostname), even when request routing improvement is disabled, the anchored redirection to the optimal EP will be performed. This enables to use only one redirection instead of two during the whole request routing mechanism.

In other embodiments, the stickiness will not be used for all the domains but it can be configured to be used only for specific domains. This enables to avoid using it in case the device does not support redirection or just a low limit.

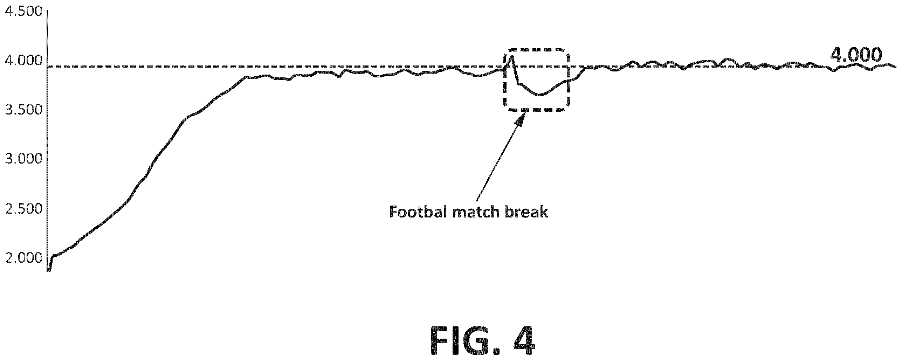

With the proposed mechanism, the previously explained problem which affected the end users experience when the servers are close to the saturation point (for example, during high audience moments) is solved or at least minimized. This is shown, for example, in figure 4, which shows the number of HLS players connected to a specific CDN server during a high audience event (live football event 17^{th} September 2017). As it can be seen in figure 4, the number of HLS players connected to the server does not show an aggressive sawtooth profile as previously shown when the proposed solution was not applied, but it is quite steady around 4000 users per server, avoiding the problematic behaviour (ping-pong effect, avalanche effect) previously explained; because with the proposed solution a single server is delivering the content to each single user during the whole video session.

Even though most of the above embodiments, the present invention has been explained for communication systems using streaming techniques for content delivery (and more specifically adaptive streaming techniques), this has been only an example. The proposed invention could be applied not only to communications using adaptive streaming but to any communication which implies the establishment of a session with consecutive requests (for example, HTTPS requests). Thanks to the proposed mechanism the clients may keep the location/redirection of the first request. A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

Content and media content may refer to any type of electronic materials such as music, videos, software, books, multimedia presentations, images, text and other electronic data which can be delivered as a stream or transferred, for example over a network to one or more users.

The description and drawings merely illustrate the principles of the invention. Although the present invention has been described with reference to specific examples, it should be understood by those skilled in the art that the foregoing and various other changes, omissions and additions in the form and detail thereof may be made, as long as they fall within the scope of the invention, which is solely defined by the appended claims. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. A method for improved multimedia content delivery to end user equipments in a content delivery network comprising several servers, the method
- A first server receiving a first message from an end user equipment, the message including a Universal Resource Locator, URL, including a first domain name;
- After receiving said first message, the first server determining if said first domain name includes an identifier of a server of the content delivery network, called anchor identifier and if not the first server sending back to the end user equipment a redirection message comprising a URL and including a second domain name in the URL, said second domain name being the result of adding to the first domain name an anchor identifier identifying the first server;
the method being **characterized by**:
wherein, when a Domain Name system, DNS, device of the content delivery network receives a domain name resolution request for a domain name including said anchor identifier, the DNS device sends back a message answering to the domain name resolution request, including the Internet Protocol, IP, address of the first server regardless the congestion level of said server, as long as the first server is available.

2. A method according to claim 1 where the first domain name is a redirected domain name.

3. A method according to any of the previous claims, where the first message is a message requesting a manifest for a multimedia content streaming session or a fragment of the multimedia content and where, if said first domain name already includes an anchor identifier of a server of the content delivery network, the first server sending the requested manifest or fragment to the end user equipment.

4. A method according to any of the previous claims where, the first domain name is not an original request domain name.

5. A method according to claim 1 where the first domain name is an original request domain name.

6. A method according to any of the previous claims, where the DNS device is a router.

7. A method according to any of the previous claims, where the first domain name belongs to a group of specific domains for which adding an anchor identifier is allowed.

8. A method according to any of the previous claims, where the multimedia content is video content.

9. A method according to any of the previous claims, where the end user equipment is a mobile phone, a tablet, an smart phone, a computer, a Personal Computer, PC, a laptop or any electronic device which is able to receive multimedia content through the communication network.

10. A Domain Name System, DNS, device for improved multimedia content delivery to end user equipments in a content delivery network comprising several servers, the device comprising:
- A receiver for receiving, through the content delivery network, a domain name resolution request for a domain name;
- A transmitter for transmitting messages through the content delivery network;
the device being **characterized by** comprising a processor configured to:
- Determine if said domain name includes an anchor identifier identifying a server; if so, determine if said server identified by the anchor identifier is available and if said domain name includes an anchor identifier identifying a server and the server is available, send back using the transmitter, a message answering to the domain name resolution request including an Internet Protocol, IP, address of the server identified by the anchor identifier regardless the congestion level of said server.

11. A system for improved multimedia content delivery to end user equipments in a content delivery network, the system
- A server comprising:
- A receiver for receiving, through the content delivery network, a first message from an end user equipment, the message including a URL including a first domain name;
- A transmitter for transmitting messages through the content delivery network;
- A Domain Name System, DNS, device comprising:
- A receiver for receiving, through the content delivery network, a domain name resolution request for a domain name;
- A transmitter for transmitting messages through the content delivery network;
- the server comprising a processor configured to, after receiving said first message, determining if said first domain name includes an identifier of a server of the content delivery network, called anchor identifier, and if not, send back to the end user equipment using its transmitter, a redirection message comprising a Universal Resource Locator, URL, and including a second domain name in the URL, which is the result of adding to the first domain name an anchor identifier identifying the server;
the system being **characterized by**:
- the DNS device comprising a processor configured to:
determine if the domain name included in the domain resolution request message includes an anchor identifier identifying a server and if said domain name includes an anchor identifier identifying a server and the server is available, send back using its transmitter, a message answering to the domain name resolution request including an Internet Protocol, IP, address of the server identified by the anchor identifier regardless the congestion level of said server.

12. A non-transitory digital data storage medium for storing a computer program which comprises instructions causing a computer executing the program to perform the method according to any of the claims 1-9.

## Patentansprüche

1. Verfahren zum verbesserten Übertragen von Multimediainhalten an Endbenutzergeräte in einem mehrere Server aufweisenden und Content Delivery Netzwerk, wobei das Verfahren Folgendes aufweist:
• einen ersten Server empfängt eine erste Nachricht von einem Endbenutzergerät, wobei die Nachricht einen Universal Resource Locator URL mit einem ersten Domainnamen enthält;
• nach Empfangen der ersten Nachricht bestimmt der erste Server, ob der erste Domainname einen Identifikator eines Servers des Content Delivery Netzwerkes, Ankeridentifikator genannt, enthält, und wenn nicht, sendet der erste Server eine Umleitnachricht, aufweisend eine URL und aufweisend einen zweiten Domainnamen in der URL an die Endbenutzereinrichtung zurück, wobei der zweite Domainname das Ergebnis eines Hinzufügens eines Ankeridentifikators, der den ersten Server identifiziert, zu dem ersten Domainnamen ist;
wobei das Verfahren **gekennzeichnet ist durch**
wenn eine Domainnamensystem, DNS, -Einrichtung des Content Delivery Netzwerkes eine Domainnamenauflösungsanforderung für einen Domainnamen empfängt, der den Ankeridentifikator enthält, die DNS-Einrichtung eine Nachricht zurücksendet, die auf die Domainnamenauflösungsanforderung antwortet, aufweisend die Internetprotokoll, IP, -Adresse des ersten Servers unabhängig vom Überlassungsgrad des Servers solange der erste Server verfügbar ist.

2. Verfahren nach Anspruch 1, wobei der erste Domainnamen ein umgeleiteter Domainname ist.

3. Verfahren nach einem der vorhergehenden Ansprüche, wobei die erste Nachricht eine Nachricht ist, die ein Manifest für eine Multimediainhaltsstream-Sitzung oder ein Fragment des Multimediainhaltes anfordert, und wobei, wenn der erste Domainname bereits einen Ankeridentifikator eines Servers des Content Delivery Netzwerkes enthält, der ersten Server das angeforderte Manifest oder Fragment an das Endbenutzergerät sendet.

4. Verfahren nach einem der vorangehenden Ansprüche, wobei der erste Domainname kein ursprünglicher Anfragedomainname ist.

5. Verfahren nach Anspruch 1, wobei der erste Domainname ein ursprüngliche Anfragedomainname ist.

6. Verfahren nach einem der Ansprüche, wobei die DNS-Einrichtung ein Router ist.

7. Verfahren nach einem der vorangehenden Ansprüche, wobei der erste Domainname zu einer Gruppe bestimmter Domains gehört, für die das Zufügen eines Ankeridentifikators erlaubt ist.

8. Verfahren nach einem der vorangehenden Ansprüche, wobei der Multimediainhalt ein Videoinhalt ist.

9. Verfahren nach einem der vorangehenden Ansprüche, wobei das Endbenutzergerät ein mobiles Telefon, ein Tablet, ein Smartphone, ein Computer, ein Personal Computer, PC, ein Laptop oder ein beliebiges elektronisches Gerät ist, das in der Lage ist, Multimediainhalte über das Kommunikationsnetzwerk zu empfangen.

10. Domainnamensystem, DNS, -Einrichtung zum verbesserten Bereitstellen von Multimediainhalten an ein Endnutzergerät in einem Content Delivery Netzwerk aufweisend mehrere Server, wobei die Vorrichtung aufweist:
• einen Empfänger zum Empfangen durch das Content Delivery Netzwerk, eine Domainnameauflösungsanforderung für einen Domainnamen;
• einen Sender zum Übertragen von Nachrichten durch das Content Delivery Netzwerk;
wobei die Vorrichtung **gekennzeichnet ist durch** das Aufweisen eines Prozessors, konfiguriert, zum:
• Bestimmen, ob der Domainname einen Ankeridentifikator enthält, der einen Server identifiziert; wenn ja, Bestimmen, ob der **durch** den Ankeridentifikator identifizierte Server verfügbar ist und wenn der Domainname einen Ankeridentifikator enthält, der einen Server identifiziert und der Server verfügbar ist, Zurücksenden einer Nachricht unter Verwendung des Senders, die auf die Domainnamenauflösungsanforderung antwortet und eine Internet Protokoll, IP, -Adresse des **durch** den Ankeridentifikator identifizierten Servers enthält, unabhängig vom Überlastungsgrad des Servers.

11. System zum verbesserten Bereitstellen von Multimediainhalten an Endnutzergeräten in einem Content Delivery Netzwerk, wobei das System aufweist:
• einen Server aufweisend:
∘ einen Empfänger zum Empfangen einer ersten Nachricht durch das Content Delivery Netzwerk von einem Endbenutzergerät, wobei die Nachricht eine URL mit einem ersten Domainnamen beinhaltet;
∘ einen Sender zum Übertragen der Nachricht durch das Content Delivery Netzwerk;
• eine Domainnamensystem, DNS, Einrichtung aufweisend:
∘ einen Empfänger zum Empfangen einer Domainnamenauflösungsanforderung durch das Content Delivery Netzwerk;
∘ einen Sender zum Senden der Nachrichten durch das Content Delivery Netzwerk;
• wobei der Server einen Prozessor aufweist, der konfiguriert ist, um nach dem Empfangen der ersten Nachricht zu bestimmen, ob der Domainname einen Identifikator eines Servers des Content Delivery Netzwerks, Ankeridentifikator genannt, enthält, und falls dies nicht der Fall ist, unter Verwendung seines Senders eine Umleitungsnachricht aufweisend einen Universal Resource Locator, URL, und aufweisend einen zweiten Domainnamen in der URL, an die Endbenutzereinrichtung zurücksendet, die das Ergebnis des Hinzufügens eines Ankeridentifikators, der den Server identifiziert, zu dem ersten Domainnamen ist;
wobei das System **gekennzeichnet ist durch**
• die DNS-Einrichtung einen Prozessor aufweist, der konfiguriert ist, um:
zu bestimmen, ob der in der Domainauflösungsanforderungsnachricht enthaltene Domainname einen Server identifizierenden Ankeridentifikator enthält, und wenn der Domainname einen einen Server identifizierenden Ankeridentifikator enthält und der Server verfügbar ist, unter Verwenden eines Senders eine Nachricht zurücksendet, die auf die Domainauflösungsanforderung antwortet und eine Internetprotokoll, IP, - Adresse des **durch** den Ankerindentikator identifizierenden Server enthält, unabhängig von dem Überlastungsgrad des Servers.

12. Nicht transistorisch digitales Datenspeichermedium zum Speichern eines Computerprogramms, das Anweisungen enthält, die einen Computer, der das Programm ausführt, veranlassen, das Verfahren nach einem der Ansprüche 1 bis 9 durchzuführen.

## Revendications

1. Procédé pour une fourniture améliorée de contenu multimédia à des équipements d'utilisateur final dans un réseau de fourniture de contenu qui comprend plusieurs serveurs, le procédé comprenant :
- le fait qu'un premier serveur reçoit un premier message en provenance d'un équipement d'utilisateur final, le message incluant un localisateur de ressource universel, URL, qui inclut un premier nom de domaine ; et
- après la réception dudit premier message, le fait que le premier serveur détermine si ledit premier nom de domaine inclut un identifiant d'un serveur du réseau de fourniture de contenu, appelé identifiant d'ancrage, et si ce n'est pas le cas, le fait que le premier serveur renvoie à l'équipement d'utilisateur final un message de redirection qui comprend un URL et qui inclut un second nom de domaine dans l'URL, ledit second nom de domaine étant le résultat de l'ajout au premier nom de domaine d'un identifiant d'ancrage qui identifie le premier serveur ;
le procédé étant **caractérisé en ce que** :
lorsqu'un dispositif de système de noms de domaine, DNS, du réseau de fourniture de contenu reçoit une requête de résolution de nom de domaine pour un nom de domaine qui inclut ledit identifiant d'ancrage, le fait que le dispositif DNS renvoie un message qui répond à la requête de résolution de nom de domaine, lequel message inclut l'adresse de protocole Internet, IP, du premier serveur sans tenir compte du niveau de congestion dudit serveur, aussi longtemps que le premier serveur est disponible.

2. Procédé selon la revendication 1, dans lequel le premier nom de domaine est un nom de domaine redirigé.

3. Procédé selon l'une quelconque des revendications précédentes, dans lequel le premier message est un message qui demande en requête une liste pour une session de diffusion en continu de contenu multimédia ou un fragment du contenu multimédia et dans lequel, si ledit premier nom de domaine inclut déjà un identifiant d'ancrage d'un serveur du réseau de fourniture de contenu, le premier serveur envoie la liste ou le fragment demandé(e) en requête à l'équipement d'utilisateur final.

4. Procédé selon l'une quelconque des revendications précédentes, dans lequel le premier nom de domaine n'est pas un nom de domaine de requête originale.

5. Procédé selon la revendication 1, dans lequel le premier nom de domaine est un nom de domaine de requête originale.

6. Procédé selon l'une quelconque des revendications précédentes, dans lequel le dispositif DNS est un routeur.

7. Procédé selon l'une quelconque des revendications précédentes, dans lequel le premier nom de domaine appartient à un groupe de domaines spécifiques pour lesquels l'ajout d'un identifiant d'ancrage est autorisé.

8. Procédé selon l'une quelconque des revendications précédentes, dans lequel le contenu multimédia est un contenu vidéo.

9. Procédé selon l'une quelconque des revendications précédentes, dans lequel l'équipement d'utilisateur final est un téléphone mobile, une tablette, un Smartphone, un ordinateur, un ordinateur personnel, PC, un ordinateur portable ou un quelconque dispositif électronique qui dispose de la capacité de recevoir un contenu multimédia par l'intermédiaire du réseau de communication.

10. Dispositif de système de noms de domaine, DNS, pour une fourniture améliorée de contenu multimédia à des équipements d'utilisateur final dans un réseau de fourniture de contenu qui comprend plusieurs serveurs, le dispositif comprenant :
- un récepteur pour recevoir, par l'intermédiaire du réseau de fourniture de contenu, une requête de résolution de nom de domaine pour un nom de domaine ;
- un émetteur pour émettre des messages par l'intermédiaire du réseau de fourniture de contenu ;
le dispositif étant **caractérisé en ce qu'**il comprend un processeur qui est configuré pour :
- déterminer si ledit nom de domaine inclut un identifiant d'ancrage qui identifie un serveur ; s'il en est ainsi, pour déterminer si ledit serveur qui est identifié par l'identifiant d'ancrage est disponible et si ledit nom de domaine inclut un identifiant d'ancrage qui identifie un serveur et si le serveur est disponible, pour renvoyer, en utilisant l'émetteur, un message qui répond à la requête de résolution de nom de domaine et qui inclut une adresse de protocole Internet, IP, du serveur qui est identifié par l'identifiant d'ancrage sans tenir compte du niveau de congestion dudit serveur.

11. Système pour une fourniture améliorée de contenu multimédia à des équipements d'utilisateur final dans un réseau de fourniture de contenu, le système comprenant :
- un serveur qui comprend :
- un récepteur pour recevoir, par l'intermédiaire du réseau de fourniture de contenu, un premier message en provenance d'un équipement d'utilisateur final, le message incluant un URL qui inclut un premier nom de domaine ;
- un émetteur pour émettre des messages par l'intermédiaire du réseau de fourniture de contenu ;
- un dispositif de système de noms de domaine, DNS, qui comprend :
- un récepteur pour recevoir, par l'intermédiaire du réseau de fourniture de contenu, une requête de résolution de nom de domaine pour un nom de domaine ;
- un émetteur pour émettre des messages par l'intermédiaire du réseau de fourniture de contenu ;
- le serveur comprenant un processeur qui est configuré pour, après la réception dudit premier message, déterminer si ledit premier nom de domaine inclut un identifiant d'un serveur du réseau de fourniture de contenu, appelé identifiant d'ancrage, et si ce n'est pas le cas, pour renvoyer à l'équipement d'utilisateur final, en utilisant son émetteur, un message de redirection qui comprend un localisateur de ressource universel, URL, et qui inclut un second nom de domaine dans l'URL, ledit second nom de domaine étant le résultat de l'ajout au premier nom de domaine d'un identifiant d'ancrage qui identifie le serveur ;
le système étant **caractérisé par :**
- **le fait que** le dispositif DNS comprend un processeur qui est configuré pour :
déterminer si le nom de domaine qui est inclus dans le message de requête de résolution de domaine inclut un identifiant d'ancrage qui identifie un serveur et si ledit nom de domaine inclut un identifiant d'ancrage qui identifie un serveur et si le serveur est disponible, pour renvoyer, en utilisant son émetteur, un message qui répond à la requête de résolution de nom de domaine et qui inclut une adresse de protocole Internet, IP, du serveur qui est identifié par l'identifiant d'ancrage sans tenir compte du niveau de congestion dudit serveur.

12. Support non transitoire de stockage de données numériques pour stocker un programme informatique qui comprend des instructions qui forcent un ordinateur à exécuter le programme pour réaliser le procédé selon l'une quelconque des revendications 1 à 9.
